# EUROPÄISCHE PATENTSCHRIFT

(11) **EP 2 831 839 B1**
(45) Veröffentlichungstag und Bekanntmachung des Hinweises auf die Patenterteilung: **13.09.2017**
(21) Anmeldenummer: 13713126.4
(22) Anmeldetag: 22.03.2013
(51) Int. Cl.: G06T 7/73

(54) **VERFAHREN ZUM AUTOMATISCHEN BETREIBEN EINER ÜBERWACHUNGSANLAGE**
METHOD FOR AUTOMATICALLY OPERATING A MONITORING SYSTEM
PROCÉDÉ D'EXPLOITATION AUTOMATIQUE D'UN SYSTÈME DE SURVEILLANCE

(30) Priorität: 29.03.2012 DE 102012205130
(43) Veröffentlichungstag der Anmeldung: 04.02.2015
(73) Patentinhaber: Robert Bosch GmbH, 70442 Stuttgart (DE)
(72) Erfinder: ROLAND, Matthias, 30451 Hannover (DE); COX, Christian, 47623 Kevelaer (DE); WARZELHAN, Jan, Karl, 31162 Bad Salzdetfurth Ot Heinde (DE)
(86) Internationale Anmeldenummer: PCT/EP2013/056010
(87) Internationale Veröffentlichungsnummer: WO 2013/143982

(56) Entgegenhaltungen:
- WO-A1-2004/042662
- DE-A1-102007 048 857
- MEI C ET AL: "Hidden view synthesis using real-time visual SLAM for simplifying video surveillance analysis", ROBOTICS AND AUTOMATION (ICRA), 2011 IEEE INTERNATIONAL CONFERENCE ON, IEEE, 9. Mai 2011 (2011-05-09), Seiten 4240-4245, XP032033916, DOI: 10.1109/ICRA.2011.5980093 ISBN: 978-1-61284-386-5
- FLECK S ET AL: "3D Surveillance A Distributed Network of Smart Cameras for Real-Time Tracking and its Visualization in 3D", COMPUTER VISION AND PATTERN RECOGNITION WORKSHOP, 2006 CONFERENCE ON NEW YORK, NY, USA 17-22 JUNE 2006, PISCATAWAY, NJ, USA,IEEE, PISCATAWAY, NJ, USA, 17. Juni 2006 (2006-06-17), Seiten 118-118, XP010922933, DOI: 10.1109/CVPRW.2006.6 ISBN: 978-0-7695-2646-1

## Beschreibung

Die Erfindung betrifft ein Verfahren zum automatischen Betreiben einer Überwachungsanlage und eine Überwachungsanlage.

### Stand der Technik

Eine videobasierte Überwachungsanlage (Überwachungssystem) kann eine Vielzahl von Kameras aufweisen. Dabei können zum Auswerten von Bildern der Kameras automatische Videoinhaltsanalysealgorithmen eingesetzt werden, um Wachpersonal zu unterstützen und auf bestimmte Ereignisse, die in einer überwachten Umgebung stattfinden, hinzuweisen. Um diese Informationen sinnvoll zu visualisieren und ein schnelles und intuitives Lokalisieren der verschiedenen Ereignisse an einem Bildschirm zu ermöglichen, wird ein dreidimensionales Modell der zu überwachenden Umgebung genutzt. Die entsprechenden Bilder der Kamera können zusätzlich in das dreidimensionale Modell projiziert werden. Dies verbessert das visuelle Verständnis einer zu überwachenden Umgebung und ermöglicht das Erfassen von visuellen Details, bspw. von Texturen, Wandfarben, Pflanzen, Bildern usw. Insgesamt wird dabei eine sehr realitätsnahe Modellierung der Umgebung, in der sich der Benutzer schnell und intuitiv virtuell bewegen kann, bereitgestellt.

Zur Realisierung einer derartigen Bedienschnittstelle wird ein zu nutzendes dreidimensionales Modell der Umgebung zunächst mittels eines CAD- (computeraided-design) Programms erstellt. Als Grundlage können evtl. vorhandene zweidimensionale Lagepläne genutzt und manuell erweitert werden. Um ein detailgetreues Modell zu erhalten, werden jedoch oftmals zusätzlich manuell erfasste Bauten oder Mobiliar, z. B. Schränke oder Tische, dem dreidimensionalen Modell hinzugefügt.

Damit die Ergebnisse der Videoanalysealgorithmen und die Bilder der Kamera in das dreidimensionale Modell der Umgebung eingebracht werden können, bedarf es einer ausführlichen Kalibrierung jeder einzelnen Kamera bezüglich des dreidimensionalen Modells.

Die Druckschrift DE 10 2005 021 735 A1 beschreibt ein Videoüberwachungssystem mit wenigstens einer Kamera für die Überwachung eines Überwachungsbereichs mit Speichermitteln für die Speicherung von Grundrissdaten des Überwachungsbereichs. Dieses Videoüberwachungssystem umfasst Mittel für die Darstellung von Videoaufnahmen aus dem Erfassungsbereich der Kamera, Mittel für die Projektion der Grundrissdaten in die Videoaufnahmen, Mittel für die Überlagerung der Grundrissdaten mit Strukturen in den Videoaufnahmen und Mittel für die Ableitung von Kameraparametern aus der Überlagerung der Grundrissdaten mit Strukturen in der Videoaufnahme.

Die Druckschrift DE 10 2008 002 241 A1 beschreibt ein Verfahren zur bildbasierten Vermessung eines Raums oder eines Teilbereichs eines Raums. Dabei werden unter Verwendung eines Messsystems, das eine Kamera aufweist, mehrere Einzelaufnahmen des Raums erzeugt. Dabei wird zumindest ein Abstand zwischen dem Messsystem und einem Raumpunkt des Raums erfasst, wobei der erfasste Abstand einer Einzelaufnahme zugeordnet wird. Weiterhin wird mit Hilfe einer Bildverarbeitungsmethode unter Berücksichtigung des erfassten Abstands ein virtuelles 3-D-Modell des Raums modelliert.

Ein Verfahren zur automatischen dreidimensionalen Vermessung eines Raums wird in der Druckschrift DE 10 2010 038 507 A1 vorgestellt. Dabei werden mit einer Kamerasensoranordnung einer Messvorrichtung niedrigauflösende Videoaufnahmen generiert. Ferner ist die Kamerasensoranordnung dazu ausgestaltet, automatisch an geometrisch geeigneten Positionen im Raum hochauflösende Bilder zu generieren. Dabei basiert die automatische Aufnahme der hochauflösenden Bilder auf einer dreidimensionalen Echtzeit-Rekonstruktion der Videoaufnahmen.

In der Druckschrift "Hidden view synthesis using real-time visual SLAM for simplifying video surveillance analysis" von Mei et al. wird beschrieben, dass zur Analyse von Videodaten einer statischen oder mobilen Überwachungskamera eine Sicht der Überwachungskamera gerendert wird. Außerdem wird eine Position der Überwachungskamera durch ein visuelles Echtzeit-SLAM-System abgeschätzt. Außerdem ist hier vorgesehen, die Sicht der Überwachungskamera bezüglich einer verdeckten Sicht zu augmentieren. Hierzu wird eine Karte einer Umgebung unter Nutzung des visuellen SLAM-Systems aufgebaut und die Überwachungskamera darin registriert.

### Offenbarung der Erfindung

Vor diesem Hintergrund werden ein Verfahren und eine Überwachungsanlage mit den Merkmalen der unabhängigen Patentansprüche vorgestellt. Weitere Ausgestaltungen der Erfindung ergeben sich aus den abhängigen Patentansprüchen und der Beschreibung.

Mit der vorgeschlagenen Erfindung kann eine automatische Konfiguration einer Überwachungsanlage zur Videoüberwachung, die mindestens eine Kamera aufweist, durchgeführt werden. Somit kann bspw. eine Inbetriebnahme einer videogestützten, dreidimensionalen Überwachungsanlage beschleunigt und ein Aufwand für deren Konfiguration, bspw. beim Hinzufügen einer neuen Kamera zu der Übenivachungsanlage, vereinfacht werden.

Zur üblicherweise automatischen Inbetriebnahme und Konfiguration im Rahmen eines Betriebs der Übenivachungsanlage kann vorgesehen sein, dass eine visuelle Karte der Umgebung mit wenigstens einem optischen Sensor einer dreidimensionalen Messanordnung bzw. eines dreidimensionalen Messsystems, die bzw. das den wenigstens einen optischen Sensor umfasst, erstellt wird. Der optische Sensor ist hierbei bspw. dazu ausgebildet, auf Basis von Videoaufnahmen Sensorbilder von der Umgebung aufzunehmen sowie, bspw. mit Radar oder Lidar, Positionen von markanten Punkten der zu erfassenden Umgebung zu vermessen, wobei jedem markanten Punkt eine Koordinate im Raum zugeordnet wird. Durch ein zusätzliches Vermessen der markanten Punkte, die in einem Videogerät aufgenommen werden, kann eine Position und/oder Ausrichtung des optischen Sensorbilds berücksichtigt werden. Demnach umfasst das Sensorbild eine optische Darstellung eines Ausschnitts der Umgebung, der mit einer Aufnahmestellung zusätzliche ortsspezifische Informationen als Aufnahmestellung zugeordnet werden. Weiterhin wird mindestens eine Kamera als Komponente der Überwachungsanlage in einer zu überwachenden Umgebung angeordnet, bspw. montiert oder durch die Umgebung bewegt. Anschließend wird diese mindestens eine Kamera einem Video Management System (VMS) der Überwachungsanlage hinzugefügt und hierbei üblicherweise mit dem Video Management System zum Austausch von Daten, bspw. für Kamerabilder, verbunden und initialisiert.

Die Informationen zu der Aufnahmestellung, die eine Position und/oder Ausrichtung des optischen Sensors beim Aufnehmen eines Sensorbilds als Aufnahmemerkmale dieses Sensorbilds umfassen, können auch durch ein Ortungsmodul oder Positionsmodul des optischen Sensors ermittelt werden. Aus den zusätzlichen Informationen, die üblicherweise die markanten Punkte, die Position sowie Ausrichtung als Aufnahmemerkmale des optischen Sensors umfassen, wird die Aufnahmestellung des Sensors bereitgestellt, die dem Sensorbild zugeordnet wird. Demnach ist eine Aufnahmestellung, die zumindest ein Aufnahmemerkmal umfasst, eine Eigenschaft des optischen Sensors beim Aufnehmen eines Sensorbilds, die ebenfalls dem aufgenommenen Sensorbild als Eigenschaft zugeordnet wird. Mit dem zumindest einen Aufnahmemerkmal der Aufnahmestellung werden orts- und/oder aufnahmebezogene Bedingungen des Sensorbilds bei dessen Aufnahme durch den optischen Sensor definiert.

Dabei kann die dreidimensionale Messanordnung in einem tragbaren Gerät, wie bspw. einem Tablet oder Smartphone, das ebenfalls durch die Umgebung bewegt werden kann, integriert sein.

Zum Erstellen der visuellen Karte der Umgebung kann vorgesehen sein, den optischen Sensor durch die Umgebung zu bewegen und die Sensorbilder aufzunehmen. Dabei können markante Punkte der Umgebung ebenfalls aufgenommen werden und zum Erstellen der visuellen Karte der Umgebung verwendet werden. Informationen zu erfassten markanten Punkten können per Funk und/oder über Kabel von dem optischen Sensor an das Video Management System der Überwachungsanlage übermittelt werden. Ein erfasstes Sensorbild, das markante Punkte von mindestens einem Referenzobjekt der Umgebung mit Koordinaten, die den markanten Punkten zugeordnet sind, umfasst, werden von dem optischen Sensor auf das Video Management System hochgeladen und gegebenenfalls in ein für das Video Management System nutzbares Format umgewandelt. Weiterhin erstellt das Video Management System aus den Sensorbildern und den zugeordneten Aufnahmestellungen eine visuelle Karte der Umgebung. Aus der visuellen Karte wird weiterhin das dreidimensionale Modell der Umgebung erstellt. Dieses dreidimensionale Modell kann mit einem Monitor und/oder einem Anzeigefeld, der bzw. das als Komponente der Überwachungsanlage ausgebildet sein kann, dargestellt werden.

Alle weiteren Schritte werden nun automatisiert vom Video Management System durchgeführt. Von dem Video Management System wird zumindest ein aktuelles Kamerabild von mindestens einer ggf. beweglichen Kamera, die dem Video Management System bekannt ist, abgegriffen und somit erfasst. Weiterhin kann durch das Video Management System von jeder neu hinzugefügten, ggf. beweglichen Kamera ein aktuelles Kamerabild abgegriffen und somit erfasst werden. Diese Kamerabilder werden mit Sensorbildern aus der visuellen Karte verglichen. Unter Berücksichtigung eines derartigen Vergleichs kann das Kamerabild in das dreidimensionale Modell projiziert werden.

Zur Durchführung des Vergleichs kann untersucht werden, welcher Bereich der Umgebung von dem Kamerabild dargestellt wird. Bei dem Vergleich wird nach wenigstens einem Sensorbild gesucht, das denselben Bereich wie das Kamerabild darstellt. Hierbei wird auch berücksichtigt, aus welcher Perspektive der Bereich dargestellt ist. Ein Sensorbild, das bzgl. einer Darstellung des Bereichs mit dem Kamerabild die größte Übereinstimmung aufweist, wird dem Kamerabild zugeordnet, wobei dem Kamerabild auch die Aufnahmestellung des Sensorbilds, die zumindest ein Aufnahmemerkmal umfasst, zugeordnet werden kann. Falls mehrere Sensorbilder bzgl. der Darstellung des Bereichs mit dem Kamerabild in vergleichbarer Weise übereinstimmen sollten, können zum Bestimmen der Aufnahmestellung des Kamerabilds Informationen von Aufnahmestellungen mehrerer Sensorbilder verwendet werden. Dabei ist es u. a. möglich, eine Position und/oder Ausrichtung der Kamera über einzelne markante Punkte, die in einem üblicherweise zweidimensionalen Kamerabild dargestellt werden sowie in der üblicherweise dreidimensionalen visuellen Karte vorhanden sind, zu bestimmen. Durch Vergleich korrespondierender markanter Punkte, die sowohl im Kamerabild als auch in der generierten visuellen Karte vorhanden sind, kann bzw. können die Position und/oder Ausrichtung der Kamera beim Aufnehmen des Kamerabilds berechnet werden. In der Regel wird das Kamerabild auf Grundlage eines durchgeführten Vergleichs zu dem wenigstens einen Sensorbild registriert, wobei für jede Kamera unter Berücksichtigung der Aufnahmestellung des wenigstens einen Sensorbilds, bspw. der Aufnahmestellungen mehrerer Sensorbilder, eine Kalibrierung berechnet wird.

Außerdem kann ein aktuelles Kamerabild der mindestens einen Kamera unter Berücksichtigung von den markanten Punkten mit den zugeordneten Koordinaten, die aus der Aufnahmestellung des wenigstens einen Sensorbilds und/oder dem wenigstens einen Sensorbild hervorgehen, in das dreidimensionale Modell projiziert und somit eingefügt werden, wobei die mindestens eine Kamera in der Umgebung platziert und/oder darin bewegt werden kann. Hierzu kann eine Korrelation des zumindest einen Kamerabilds unter Berücksichtigung einer Position, einer Trajektorie, einer Bewegung, einer Ausrichtung und/oder eines Sichtfelds als Information und somit als Aufnahmeparameter für eine Aufnahmestellung der mindestens einen Kamera vorgenommen werden. Somit kann ein Platzieren der mindestens einen Kamera unter Berücksichtigung des aktuellen Kamerabilds sowie der Aufnahmestellung, die die Position, Trajektorie, Bewegung, Anordnung und/oder das Sichtfeld als Aufnahmemerkmale der mindestens einen Kamera bei Aufnehmen des aktuellen Kamerabilds umfasst, berücksichtigt werden.

Danach steht dem Video Management System ein komplettes dreidimensionales Modell der zu überwachenden Umgebung zur Verfügung, wobei jeder Kamera der Überwachungsanlage durch automatisches Registrieren eines von der Kamera ggf. bewegungsabhängig erfassten Sichtfelds der Umgebung, das durch das aktuelle Bild dargestellt werden kann, ein korrespondierender Ausschnitt des dreidimensionalen Modells, das auf der visuellen Karte beruht, zugeordnet wird. Später angebrachte und/oder angeordnete Kameras können ebenfalls ohne manuelle Kalibrierung automatisch der Überwachungsanlage und/oder dem Video Management System hinzugefügt werden. Dabei wird eine neue Kamera, die Kamerabilder aufnimmt, durch Vergleich der Kamerabilder mit Sensorbildern der visuellen Karte kalibriert, wobei einem Kamerabild unter Berücksichtigung einer Aufnahmeposition wenigstens eines Sensorbilds, bspw. nach einer Berechnung einer Aufnahmestellung, zugeordnet wird, weiterhin kann der Kamera beim Aufnehmen des Kamerabilds diese Aufnahmestellung zugeordnet werden. Falls dem Kamerabild eine Aufnahmestellung eines Sensorbilds zugeordnet wird, das mit dem Kamerabild bzgl. der Darstellung weitgehend übereinstimmt, kann der Kamera auch diese Aufnahmestellung zugeordnet werden.

Sollte sich die zu beobachtende Umgebung mit der Umgebung, z. B. durch Umbauarbeiten, erheblich ändern, kann das dreidimensionale Modell schnell und einfach angepasst werden, indem nur der betroffene Bereich der Umgebung von dem wenigstens einen optischen Sensor des dreidimensionalen Messsystems erneut erfasst wird, und aktualisierte Sensorbilder mit zugeordneten Aufnahmestellungen der visuellen Karte hinzugefügt werden.

Wie zuvor beschrieben, ist die Erstellung des dreidimensionalen Modells auf Grundlage der visuellen Karte vorgesehen. Dies kann mitunter sehr zeit- und kostenintensiv sein, falls bspw. keine Lagepläne als Basis dienen können oder diese veraltet sind. Aber auch wenn aktuelle Lagepläne der Umgebung vorhanden sind, ist die Erstellung eines detaillierten Modells aufwendig. Mit der vorgestellten Erfindung können diese zeit- und kostenintensiven Arbeiten durch Nutzung des zumindest einen optischen Sensors zum Bereitstellen der visuellen Karte auf ein Minimum reduziert werden.

Weiterhin wird unter Berücksichtigung der Aufnahmestellung zumindest eines Sensorbilds, das einem Kamerabild zugeordnet wird, ein Sichtbereich, der von einer Position und Ausrichtung jeder einzelnen fest installierten Kamera zur Überwachung auf das dreidimensionale Modell bezogen ist, ermittelt. Dies erfordert üblicherweise einen erheblichen manuellen Aufwand, der mit der Anzahl der Kameras steigt. Durch Erfassung der Umgebung mit dem zumindest einen optischen Sensor werden diese Arbeiten automatisiert.

Ebenso kann bei beweglichen PTZ Kameras (Pan, Tilt, Zoom bzw. Schwenken, Neigen, Zoomen) eine aktuelle Aufnahmestellung, die Position, Trajektorie, Bewegung, Ausrichtung und/oder ein Sichtfeld als zumindest ein Aufnahmemerkmal umfasst, beim Aufnehmen des aktuellen Kamerabilds mit dem vorgeschlagenen Verfahren validiert werden und gegebenenfalls bei einer Initialkalibrierung der Kamera nachjustiert werden. Typischerweise wird aus der Initialkalibrierung und einer aktuellen Motorsteuerungsposition für die Kamera die tatsächliche Position, Trajektorie, Bewegung, Ausrichtung, Kalibrierung und/oder das Sichtfeld als Aufnahmemerkmal der Aufnahmestellung beim Aufnehmen des aktuellen Kamerabilds auf Grundlage des Vergleichs mit Sensorbildern berechnet.

Mit dem vorgeschlagenen Verfahren ergibt sich u. a. die Möglichkeit, mobile Kameras, z. B. von einem als sog. Smartphone ausgebildeten Mobiltelefon oder von einem als sog. Tablet-Gerät ausgebildeten tragbaren Gerät, das auch einen Computer aufweisen kann, im dreidimensionalen Modell der Umgebung zu lokalisieren. Dies ist auch dann möglich, wenn die aktuelle Position im dreidimensionalen Modell nicht im Sichtfeld der zur Überwachung ausgebildeten Kameras liegt. Mit dieser Möglichkeit kann ein Navigationssystem innerhalb von Gebäuden realisiert werden, um z. B. Wach personal gezielt zu bestimmten Ereignissen in der zu überwachenden Umgebung zu leiten.

In Ausgestaltung werden hierbei zur Überwachung Kameras in Geräten verwendet, die bspw. als Tablets oder Smartphones ausgebildet sein können, und über funkgestützte Kommunikationsverfahren, wie WLAN, Bluetooth, UMTS etc., mit dem Video Management System und/oder einer Recheneinheit der Überwachungsanlage eine Verbindung zum Austausch von Daten bereitstellen können. Diese Verbindung kann genutzt werden, um die Informationen auszutauschen. Das Video Management System kann mit den Geräten verbunden werden und mit diesen Geräten Daten über das dreidimensionale Modell und/oder aktuell aufgenommene Kamerabilder austauschen. Ebenso können Video- und/oder Bilddaten für aktuelle Kamerabilder aus einem derartigen Gerät mit denen des zur Überwachung vorgesehenen dreidimensionalen Modells registriert werden.

Bisherige dreidimensionale Modelle sind untexturiert oder mit künstlichen Texturen überzogen. Dies wirkt sich nachteilig auf die Realitätstreue des dreidimensionalen Modells aus, was wiederum das Navigieren am Bildschirm erschwert. Nur in Bereichen, in denen Kamerabilder der Kamera in das dreidimensionale Modell projiziert werden können, kann das dreidimensionale Modell realitätsgetreu nachgebildet werden, allerdings dort auch nur aus einer Kamerablickrichtung, wobei ein positions- und ausrichtungsabhängiges Sichtfeld der Kamera zu berücksichtigen ist.

Die Erfindung behebt diesen Mangel und zeigt auch für Bereiche außerhalb des Sichtfelds und somit eines Sichtbereichs der Kameras der Überwachungslage reale Texturen. Die Überwachungsanlage umfasst mindestens eine Kamera, die während einem automatischen Erstellen des dreidimensionalen Modells Kamerabilder der Umgebung erstellt. Diese aktuellen Kamerabilder, wobei es sich um Fotos und/oder um Videobilder handeln kann, werden verwendet, um das dreidimensionale Modell anschließend zu texturieren. Dabei umfasst eine reale Textur eine Eigenschaft einer Fläche, die die Umgebung wenigstens abschnittsweise begrenzt, bspw. deren Farbe und/oder Oberflächenstruktur, falls diese als Mauerwerk oder Teppichboden ausgebildet sein sollte.

Für die vorgeschlagene automatische Erstellung und Konfiguration einer dreidimensionalen Überwachungsanlage mit mehreren Kameras kann die dreidimensionale Messanordnung mit dem optischen Sensor zur Modellierung der Umgebung, bspw. eines Innenraums der Umgebung, verwendet werden. Mit diesem optischen Sensor kann eine dreidimensionale, videobasierte und hochgenaue Rekonstruktion eines dreidimensionalen Modells der Umgebung genutzt werden. Die visuelle Karte zum Erstellen des dreidimensionalen Modells umfasst die Sensorbilder mit zugeordneten Aufnahmestellungen. Dabei weist die dreidimensionale Messanordnung zumindest einen derartigen optischen Sensor auf.

Mit Hilfe der dreidimensionalen Messanordnung kann durch einfaches Abfilmen von mindestens einem zu überwachenden Bereich der Umgebung durch den optischen Sensor ein texturiertes dreidimensionales Modell von diesem mindestens einen Bereich der Umgebung bereitgestellt werden. Durch geeignete Rückkopplung (Feedback) steuert die dreidimensionale Messanordnung mit dem optischen Sensor den Nutzer durch die zu erfassende Umgebung, informiert über den aktuellen Status der Rekonstruktion der Umgebung und ermöglicht so ein schnelles und zuverlässiges Erstellen der visuellen Karte, aus der dann das dreidimensionale Modell gebildet wird.

Neben dem dreidimensionalen Modell erzeugt die dreidimensionale Messanordnung die zum dreidimensionalen Modell registrierte visuelle Karte der Umgebung, die üblicherweise natürliche visuelle Merkmale (Landmarken) als markante Punkte und markante Kamerapositionen und/oder Sichtfelder (Keyframes) als Aufnahmemerkmale von Aufnahmestellungen der Kameras umfasst. Die visuellen Merkmale können über unterschiedliche, ggf. trajektorie- und/oder bewegungsabhängige Perspektiven und Standorte (Positionen) der aufzeichnenden Kamera identifiziert, einander zugeordnet und räumlich rekonstruiert werden.

Somit werden markante Punkte der Umgebung unter Berücksichtigung von Kamerapositionen und/oder Kamerabewegungen räumlich lokalisiert. Mit der visuellen Karte als Basis können bei einer genügend großen Überlappung zwischen einem Kamerabild der Kamera und einem Sensorbild der visuellen Karte des dreidimensionalen Modells weitere Kamerapositionen und/oder Kamerabewegungen, auch von unterschiedlichen Kameras, im dreidimensionalen Modell automatisch lokalisiert werden. So ermöglicht die registrierte visuelle Karte eine automatische Bestimmung der Position und Ausrichtung jeder fest installierten, zur Überwachung ausgebildeten Kamera. Dabei kann ggf. auch eine fest installierte Kamera bzgl. einer Position, an der sie angeordnet ist, drehbar und/oder schwenkbar und somit beweglich sein. Demnach ist auch ein Sichtfeld dieser Kamera beweglich, so dass mit der Kamera unterschiedliche Ausschnitte der Umgebung erfasst werden können. Zusätzlich können über die visuelle Karte mobile, mit Kameras ausgestattete Geräte, z. B. ein Smartphone oder ein Tablet-Gerät, in Echtzeit im dreidimensionalen Modell ggf. auch unter Berücksichtigung ihrer Ausrichtung lokalisiert werden. Wachpersonal, das bei sich eine mobile Kamera trägt, kann so jederzeit im dreidimensionalen Modell lokalisiert und navigiert werden. Hierzu steht die mobile Kamera mit der Recheneinheit der Überwachungsanlage in Kontakt und stellt dieser Informationen über deren Aufnahmestellung, d. h. Position, Trajektorie, Bewegung, Ausrichtung und/oder Sichtfeld als Aufnahmemerkmal bereit.

Eine beschriebene Lokalisierung eines Geräts und somit einer Kamera kann bei einer Ausführung des Verfahrens zum Erstellen des dreidimensionalen Modells realisiert werden. Eine Erstellung des dreidimensionalen Modells basiert auf der durch den zumindest einen optischen Sensor erstellten visuellen Karte der Umgebung. Für die Lokalisierung wird lediglich die Information aus der visuellen Karte, die Sensorbilder mit den zugeordneten Aufnahmestellungen umfasst, verwendet. Da die visuelle Karte zum dreidimensionalen Modell registriert ist, kommt eine Lokalisierung des Geräts innerhalb der visuellen Karte einer Lokalisierung innerhalb des dreidimensionalen Modells gleich. Bei der vorgenommenen Lokalisierung wird in Ausgestaltung die Trajektorie und/oder Bewegung des Geräts in der Umgebung berücksichtigt. Demnach kann das Gerät nicht nur durch einen Punkt, sondern durch eine Vielzahl von Punkten, die eine Bahn der Bewegung und/oder Trajektorie des Geräts in der Umgebung bilden, lokalisiert werden.

Eine mobile Kamera, die z. B. in einem Smartphone angeordnet ist, kann ebenso wie eine zur Überwachung vorgesehene statische Kamera mit dem Video Management System verbunden und ebenfalls anhand von zumindest einem aktuellen Kamerabild, üblicherweise zumindest einem Videobild, durch Vergleich mit Sensorbildern der visuellen Karte registriert werden. Dazu tauschen ein mobiles Gerät, das die mobile Kamera aufweist, und/oder die mobile Kamera mit dem Video Management System die hierfür notwendigen Informationen zur Aufnahmestellung aus. So kann bspw. von dem mobilen Gerät ein von der Kamera an einer Position der Umgebung aufgenommenes Kamerabild an das Video Management System gesendet werden. Dieses Kamerabild, das der Position zugeordnet ist, wird von dem Video Management System für das dreidimensionale Modell registriert, wobei das dreidimensionale Modell an die an der Position angeordnete Kamera zurückgeschickt wird.

Auf dem bspw. als Smartphone ausgebildeten Gerät kann die visuelle Karte der zu überwachenden Umgebung gespeichert sein, wobei in diese visuelle Karte und somit auch in das dreidimensionale Modell die Position und/oder Trajektorie des Geräts eingezeichnet werden kann. Anschließend kann sich das mobile Gerät innerhalb des dreidimensionalen Modells selbsttätig lokalisieren und/oder von der Überwachungsanlage lokalisiert werden. Eine Navigation für das Gerät kann dadurch umgesetzt werden, indem in einer Zentrale, von der aus die Umgebung mit der Überwachungsanlage zu überwachen ist, automatisch und/oder durch anderes Wachpersonal ausgelöst, Instruktionen darüber übermittelt werden, wo z. B. ein Ereignis passiert, wobei Daten zu diesen Instruktionen auf einem Display bzw. Anzeigefeld des Geräts angezeigt werden. Ist das Gerät lokalisiert, kann, wie bei einem Navigationsgerät, das dreidimensionale Modell auf dem Anzeigefeld dargestellt werden, wobei durch zusätzliches Einblenden eines Pfeils als Orientierungshilfe Instruktionen darüber bereitgestellt werden können, wohin man sich hinbewegen muss. Alternativ oder ergänzend kann auch eine Navigation über augmented reality (erweiterte Realität) bereitgestellt werden, indem das Gerät in eine Blickrichtung gehalten wird und die entsprechenden Instruktionen in ein von der Kamera live aufgenommenes Kamerabild eingeblendet werden.

Durch die räumliche Rekonstruktion einer dreidimensionalen Videosequenz, die aktuelle Kamerabilder umfassen kann, zu der visuellen Karte und dem dreidimensionalen Modell können z. B. realitätstreue Texturen für das gesamte dreidimensionale Modell berechnet werden. Die einzelnen Sensorbilder des zumindest einen optischen Sensors werden wie bei einem Zusammenfügen von Bildern (Image Stitching) zur Bereitstellung von Panoramaaufnahmen räumlich zusammengefügt und über geeignete Verfahren zur Helligkeits- und Farbanpassung (Image Blending) zu einem realistischen und visuell ansprechenden Gesamtbild für die Texturen des dreidimensionalen Modells der Umgebung rekonstruiert. Die erfindungsgemäße Überwachungsanlage ist dazu ausgebildet, sämtliche Schritte des vorgestellten Verfahrens durchzuführen. Dabei können einzelne Schritte dieses Verfahrens auch von einzelnen Komponenten der Überwachungsanlage durchgeführt werden. Weiterhin können Funktionen der Überwachungsanlage oder Funktionen von einzelnen Komponenten der Überwachungsanlage als Schritte des Verfahrens umgesetzt werden. Außerdem ist es möglich, dass Schritte des Verfahrens als Funktionen wenigstens einer Komponente der Überwachungsanlage oder der gesamten Überwachungsanlage realisiert werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen
- Figur 1: zeigt in schematischer Darstellung eine erste Ausführungsform für ein dreidimensionales Modell einer ersten Umgebung sowie zugehörige Bilder.
- Figur 2: zeigt in schematischer Darstellung das dreidimensionale Modell aus Figur 1 aus dem Sichtfeld einer Kamera mit und ohne Überlagerung des Sichtfelds der Kamera.
- Figur 3: zeigt in schematischer Darstellung einen optischen Sensor aus unterschiedlichen Perspektiven.
- Figur 4: zeigt in schematischer Darstellung ein Beispiel für eine Umgebung, die mit einer dritten Ausführungsform einer erfindungsgemäßen Überwachungsanlage zu überwachen ist.
- Figur 5: zeigt in schematischer Darstellung dieselbe Umgebung wie in Figur 4 aus einer anderen Perspektive, die mit der ersten Ausführungsform der erfindungsgemäßen Überwachungsanlage zu überwachen ist.
- Figur 6: zeigt eine vierte Ausführungsform einer erfindungsgemäßen Überwachungsanlage.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

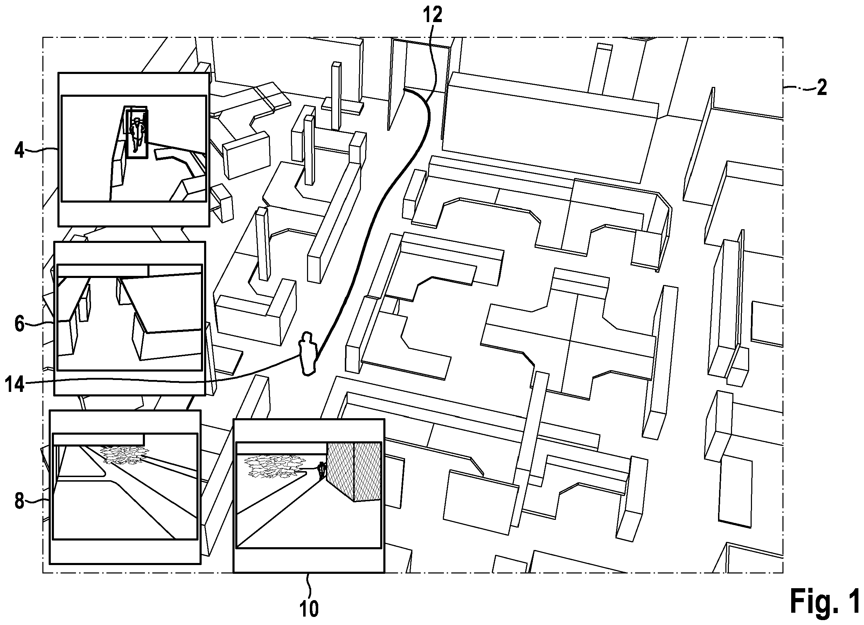

Figur 1 zeigt in schematischer Darstellung mehrere Beispiele für Kamerabilder 4, 6, 8, 10 von Bereichen einer Umgebung, die von einer ersten Ausführungsform einer erfindungsgemäßen Überwachungsanlage, die mehrere zusammengeschaltete Kameras aufweist, erfasst werden. Dabei ist vorgesehen, dass von der Überwachungsanlage auch ein dreidimensionales Modell 2 der Umgebung bereitgestellt wird, wobei dieses dreidimensionale Modell 2 der Umgebung eine Trajektorie 12 einer Person 14 zeigt.

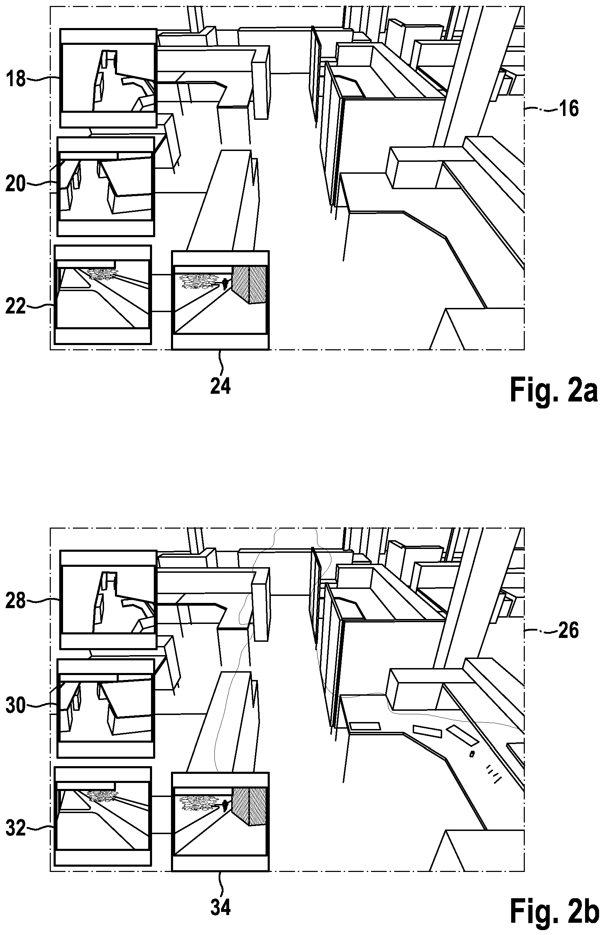

In Figur 2 sind ein Beispiel für eine visuelle Karte 16, ein dreidimensionales Modell 26 sowie Kamerabilder 18, 20, 22, 24, 28, 30, 32, 34 einer Umgebung dargestellt, die von einer zweiten Ausführungsform einer erfindungsgemäßen Überwachungsanlage bereitgestellt werden. Dabei geht das dreidimensionale Modell 26 in Figur 2b aus der visuellen Karte 16 in Figur 2a hervor, wobei bei dem dreidimensionalen Modell 26 aus Figur 2b Kamerabilder der visuellen Karte 16 überlagert werden und/oder darin projiziert sind, wodurch, bspw. für den Schreibtisch rechts, ein höherer Detailgrad erzielt werden kann.

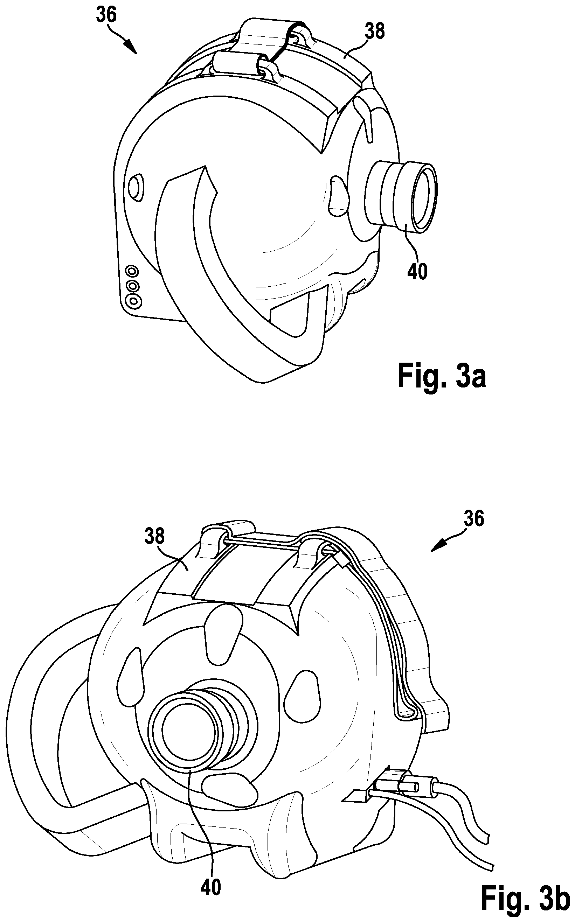

Figur 3 zeigt in schematischer Darstellung ein Beispiel eines optischen Sensors 36 aus zwei verschiedenen Perspektiven, mit dem bei einer Ausführung der Erfindung eine videobasierte Erfassung eines dreidimensionalen Modells einer zu erfassenden Umgebung realisiert werden kann. Der hier vorgestellte optische Sensor 36 als Messanordnung ist als Beispiel für ein videobasiertes System ausgebildet. Die hier gezeigte Ausführungsform des optischen Sensors 36 ist als Messkamera ausgebildet und umfasst neben einem Gehäuse 38 ein Objektiv 40. Es ist vorgesehen, dass die Umgebung mit dem optischen Sensor 36 quantitativ erfasst wird. Dies bedeutet, dass einem markanten Punkt eines Objekts, das innerhalb der Umgebung angeordnet und auf einem Sensorbild des optischen Sensors 36 abgebildet ist, eine Koordinate im Raum zugeordnet wird. Dabei kann als Aufnahmestellung eines von dem optischen Sensor 36 aufgenommenen Sensorbilds als zumindest ein Aufnahmemerkmal eine Position, Trajektorie, Bewegung, Ausrichtung und/oder ein Sichtfeld des optischen Sensors 36 anhand von bspw. markanten Punkten im Raum erfasst werden. Dieses zumindest eine Aufnahmemerkmal zur Definition einer jeweiligen Aufnahmestellung des optischen Sensors 36 beim Aufnehmen eines Sensorbilds wird eben diesem aufgenommenen Sensorbild als Aufnahmestellung zugeordnet. Der in Figur 3 vorgestellte optische Sensor 36 ist videobasiert ausgebildet. Es ist jedoch auch möglich, zur Umsetzung der Erfindung einen optischen Sensor zu verwenden, der die zu erfassende Umgebung, üblicherweise markante Punkte von in der Umgebung zu erfassenden Objekten auf Basis von Rader oder Lidar quantitativ erfasst und erfassten Punkten Koordinaten im Raum zuordnet.

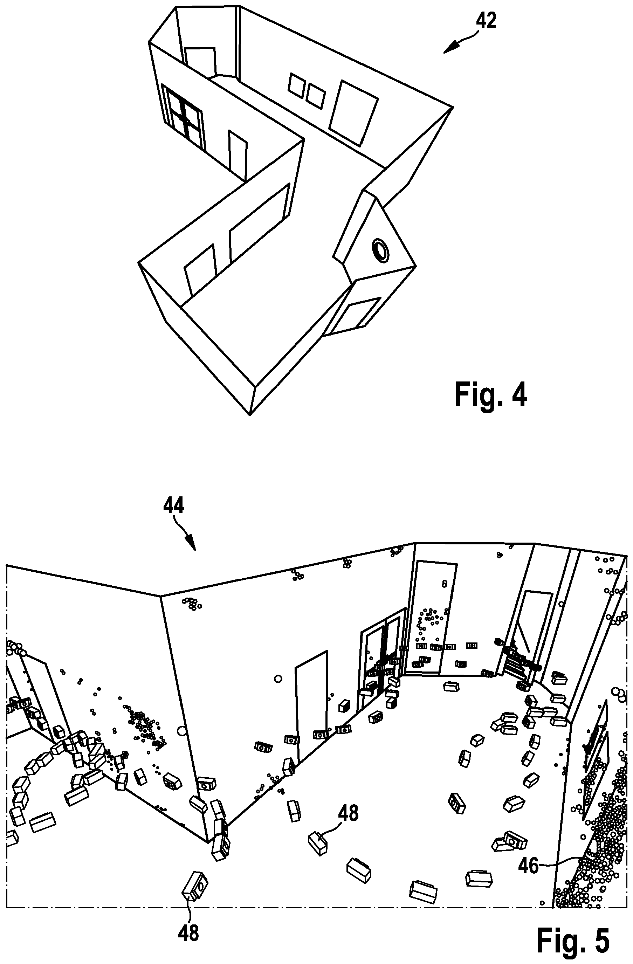

Figur 4 zeigt in schematischer Darstellung ein texturiertes, dreidimensionales Modell 42 eines Innenraums einer Umgebung, die von einer dritten Ausführungsform einer erfindungsgemäßen Überwachungsanlage bereitgestellt wird. Dabei wurde diese Darstellung des dreidimensionalen Modells 42 von dem optischen Sensor 36 aus Figur 3 automatisch erstellt und einem Video Management System der dritten Ausführungsform einer erfindungsgemäßen Überwachungsanlage bereitgestellt.

Figur 5 zeigt ein zweites Beispiel für ein dreidimensionales Modell 44 der Umgebung aus Figur 4, die von dem optischen Sensor 36 bereitgestellt wird. In das dreidimensionale Modell 44 sind sogenannte Landmarken 46 als markante Punkte der Umgebung projiziert. Außerdem sind trajektorie- sowie bewegungsabhängige Positionen und Ausrichtungen einer beweglichen Kamera 48 in das aktuelle Bild 44 projiziert. An mindestens einer dieser Positionen wird unter Berücksichtigung einer jeweiligen trajektorie- und/oder positionsabhängigen Ausrichtung und/oder eines jeweiligen trajektorie- und/oder positionsabhängigen Sichtfelds der Kamera 48 ein aktuelles Kamerabild aufgenommen und extrahiert, wobei dieses Kamerabild mit Sensorbildern der visuellen Karte unter Berücksichtigung der markanten Punkte verglichen wird. Somit zeigt Figur 5 wie eine mobile Kamera 48 im dreidimensionalen Modell 44 lokalisiert werden kann

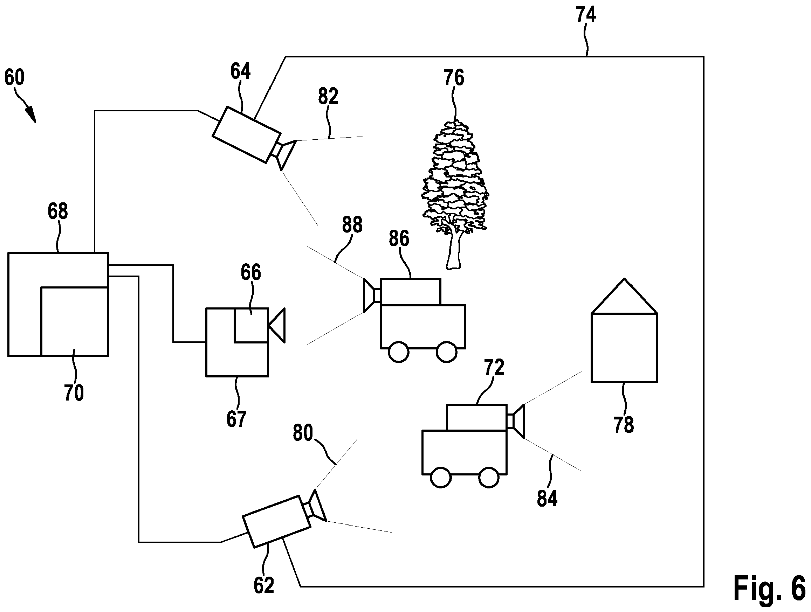

Figur 6 zeigt in schematischer Darstellung eine vierte Ausführungsform einer erfindungsgemäßen Überwachungsanlage 60, die hier zwei fest installierte aber dennoch schwenk- oder drehbare Kameras 62, 64, einen mobilen optischen Sensor 66 als Komponente einer dreidimensionalen Messanordnung 67 sowie eine Recheneinheit 68, die ein Video Management System 70 umfasst, aufweist. Dabei sind die beiden fest installierten Kameras 62, 64 sowie der optische Sensor 66 mit der Recheneinheit 68 und somit auch mit dem Video Management System 70 verbunden. Als weitere Komponenten umfasst die Überwachungsanlage 60 zwei mobile Kameras 72, 86, die innerhalb einer Umgebung 74, die von der Überwachungsanlage 60 zu erfassen ist, bewegt werden können. Hierbei ist vorgesehen, dass die mobilen Kameras 72, 86 mit der Recheneinheit 68 über Funk Daten austauschen können.

Innerhalb der zu erfassenden Umgebung 74 sind beispielhaft Objekte 76, 78, d. h. ein Baum und ein Gebäude, dargestellt. Für alle hier gezeigten Kameras 62, 64, 72, 86 sind in Figur 6 zudem Sichtfelder 80, 82, 84, 88 dargestellt, mit denen verdeutlicht wird, welcher Bereich der Umgebung 74 mit einer jeweiligen Kamera 62, 64, 72, 86 erfasst wird.

Bei einer Ausführungsform eines erfindungsgemäßen Verfahrens zum automatischen Betreiben, u. a. zum automatisch Einrichten, der Überwachungsanlage 60, die zum Überwachen der Umgebung 74 ausgebildet ist, ist vorgesehen, dass der wenigstens eine Bereich der Umgebung 74 von dem optischen Sensor 66 der dreidimensionalen Messanordnung 67 durch Aufnehmen von Sensorbildern erfasst wird. Auf Grundlage des von dem optischen Sensor 66 erfassten Bereichs der Umgebung 74 wird eine visuelle Karte des wenigstens einen Bereichs der Umgebung 74 bereitgestellt, wobei diese visuelle Karte die Sensorbilder mit zugeordneten Aufnahmestellungen umfasst. Hierbei können markante Punkte, die in Sensorbildern abgebildet sind, Koordinaten im Raum zugeordnet werden.

Außerdem wird der Überwachungsanlage 60 mindestens eine Kamera 62, 64, 72, 86 hinzugefügt, wobei diese mindestens eine Kamera 62, 64, 72, 86 mit der Überwachungsanlage 60 zum Austausch von Daten verbunden wird. Weiterhin wird von der mindestens einen Kamera 62, 64, 72, 86 zumindest ein aktuelles Kamerabild wenigstens eines Bereichs der Umgebung 74 aufgenommen. Es ist vorgesehen, dass das zumindest eine aktuelle Kamerabild mit Sensorbildern der visuellen Karte verglichen wird. Außerdem wird das zumindest eine aktuelle Kamerabild zu wenigstens einem Sensorbild der visuellen Karte registriert. Bei einem Vergleich des zumindest einen Kamerabilds mit den Sensorbildern werden auch markante Punkte der Umgebung, die auf dem zumindest einen Kamerabild abgebildet sind, berücksichtigt. Unter Berücksichtigung von markanten Punkten der Umgebung, die sowohl auf dem zumindest einen Kamerabild und wenigstens einem Sensorbild abgebildet sind, ist es möglich, dieses zumindest eine Kamerabild dem wenigstens einen Sensorbild zuzuordnen.

In Ausgestaltung werden eine Position, eine Trajektorie, eine Bewegung, eine Ausrichtung und/oder ein Sichtfeld 80, 82, 84, 88 der mindestens einen Kamera 62, 64, 72, 86 beim Aufnehmen des wenigstens einen Bereichs der Umgebung 74 berücksichtigt. Zudem ist vorgesehen, die mindestens eine Kamera 62, 64, 72, 86 in dem dreidimensionalen Modell zu platzieren und/oder zu bewegen, was auch ein Drehen, Kippen oder Schwenken einer installierten Kamera 62, 64, 72, 86 umfassen kann. Dem dreidimensionalen Modell kann bei einem Platzieren und/oder Bewegen der mindestens einen Kamera 62, 64, 72, 86 die Position, die Trajektorie, die Bewegung, die Ausrichtung und/oder das Sichtfeld 80, 82, 84, 88 als Aufnahmemerkmal einer Aufnahmestellung der mindestens einen Kamera 62, 64, 72, 86 beim Aufnehmen des Kamerabilds hinzugefügt werden. Außerdem kann ein Format des dreidimensionalen Modells angepasst werden.

Von dem optischen Sensor 66 werden zum Bereitstellen der visuellen Karte beim Aufnehmen von Sensorbildern markante Punkte von Objekten 76, 78 innerhalb des wenigstens eines Bereichs der Umgebung 74 gemessen. Dabei werden den Punkten der Objekte 76, 78 Koordinaten im Raum zugeordnet. Somit umfasst die visuelle Karte eine Menge von Koordinaten der markanten Punkte, die als Referenz zur Ortung von Kameras 62, 64, 72, 86 genutzt werden können. Nach einer Registrierung des mindestens einen aktuellen Kamerabilds zu der visuellen Karte ist es möglich, in dem mindestens einen aktuellen Kamerabild die Koordinaten der markanten Punkte darzustellen, üblicherweise einzublenden.

Die mindestens eine Kamera 62, 64, 72, 86 kann dem Video Management System 70 hinzugefügt werden, wobei das dreidimensionale Modell auf das Video Management System 70 hochgeladen wird. Außerdem wird von dem wenigstens einen Bereich der Umgebung 74, der von dem optischen Sensor 66 erfasst wird, die visuelle Karte, die Sensorbilder mit Koordinaten der markanten Punkte der Objekte 76, 78 innerhalb der Umgebung 74 umfasst, bereitgestellt.

Neben einer optischen Erfassung der Trajektorie oder Bewegung der Kameras 72, 86 durch den optischen Sensor 66 und/oder durch mindestens eine andere Kamera 62, 64, 72, 86 können dem Video Management System 70 auch Koordinaten der Trajektorie der Kameras 72, 86, die von dem Referenzobjekt 86 bei deren Bewegung ermittelt werden, bspw. über Funk übermittelt werden.

Weiterhin wird das aktuelle Kamerabild wenigstens einem Sensorbild der visuellen Karte unter Berücksichtigung jeweils abgebildeter markanter Punkte zugeordnet. Es ist auch möglich, mehrere aktuelle Kamerabilder miteinander zu verbinden. Eine Zuordnung eines aktuellen Kamerabilds zu der visuellen Karte wird unter Berücksichtigung einer Platzierung der mindestens einen Kamera 62, 64, 72, 86 in der visuellen Karte auf Grundlage von Aufnahmestellungen, die den Sensorbildern zugeordnet sind und Aufnahmemerkmale umfassen, durchgeführt. Bei dieser Platzierung der mindestens einen Kamera 62, 64, 72, 86 in der visuellen Karte werden deren Position, Trajektorie, Bewegung, Ausrichtung und/oder Sichtfeld 80, 82, 84 berücksichtigt, somit ist es möglich, für ein Objekt 76, 78 in der Umgebung 74 aus unterschiedlichen Perspektiven Kamerabilder aufzunehmen und zu der visuellen Karte zu registrieren. Die Kameras 62, 64, 72, 86 werden in einem zu überwachenden Bereich der Umgebung 74 angeordnet, d. h. installiert, also z. B. an der Decke montiert und/oder darin bewegt. Anschließend werden die Kameras 62, 64, 72, 86 an eine vorhandene Infrastruktur zur Datenverarbeitung angeschlossen, z. B. Ethernet, WLAN oder BNC, und dem Video Management System 70 hinzugefügt. Die Registrierung der Kameras 62, 64, 72, 86 in der visuellen Karte wird dann automatisch durchgeführt.

Auf Grundlage der von dem optischen Sensor 66 bereitgestellten visuellen Karte kann ein texturiertes dreidimensionales Modell des wenigstens einen Bereichs der Umgebung 74 durch Erfassung der Koordinaten der markanten Punkte bereitgestellt werden, wobei auch außerhalb eines Sichtfelds 80, 82, 84, 88 der mindestens einen Kamera 62, 64, 72, 86, die in dem dreidimensionalen Modell platziert ist, eine Textur der Umgebung 74 bereitgestellt werden kann.

Die mindestens eine Kamera 62, 64, 72, 86 kann dem Video Management System 70 bei einer Einrichtung und/oder Initialisierung der Überwachungsanlage 60 aber auch bei laufendem Betrieb der Überwachungsanlage 60 automatisch hinzugefügt werden. Somit ist eine Nachjustierung der Überwachungsanlage 60 möglich.

Bei einer Vermessung der Umgebung 74 mit dem optischen Sensor 66 werden zusätzlich zu den Sensorbildern als Informationen zur Aufnahmestellung als Aufnahmemerkmale Landmarken als markante Punkte und so genannte Keyframes generiert. Die in einem aktuellen Kamerabild extrahierten markanten Punkte, in der Regel Punkte von Objekten 76, 78, werden mit den Merkmalen der in der visuellen Karte befindlichen registrierten markanten Punkten verglichen. Können genügend, zumindest drei, korrespondierende markante Punkte eines Sensorbilds sowie eines Kamerabilds gefunden werden, kann mit Hilfe von photogrammetrischen Verfahren die Position und Orientierung des aktuellen Kamerabilds in der visuellen Karte unter Berücksichtigung einer Position, Ausrichtung und eines Sichtfelds 80, 82, 84, 88 einer Kamera 62, 64, 72, 86, die dieses Kamerabild aufnimmt, berechnet werden.

Wenn dem Video Management System 70 eine neue Kamera 62, 64, 72, 86 hinzugefügt wird, bspw. bei einer Neuinstallation, wird diese Kamera 62, 64, 72, 86 im Video Management System 70 installiert. Eine Kalibrierung und Positionierung der neuen Kamera 62, 64, 72, 86 im dreidimensionalen Modell über die visuelle Karte wird automatisch umgesetzt.

Ein Aspekt für die dreidimensionale Geometrierekonstruktion eines Videofilms oder einer Ansammlung von überlappenden Einzelbildern sind Bildmerkmale, z. B. markante Ecken, Kanten von Objekten 76, 78, die den gleichen räumlichen Punkt in der gefilmten oder fotografierten Umgebung 74 beschreiben. Durch Bildverarbeitungsalgorithmen können diese Bildmerkmale invariant gegen verschiedenste Transformationen beschrieben und einander in unterschiedlichen Kamerabildern zugeordnet werden.

Durch Maßnahmen aus den Bereichen Photogrammetrie und Computer Vision (Multiple View Geometry) kann aus korrespondierenden Bildmerkmalen zwischen einem Sensorbild und einem Kamerabild die räumliche Transformation zwischen Aufnahmestandpunkten mindestens einer Kamera 62, 64, 72, 86 berechnet werden, wobei ein Aufnahmestandpunkt aus einer Position, einer Ausrichtung und/oder einem Sichtfeld einer Kamera 62, 64, 72, 86 bestimmt werden kann. Mit Hilfe dieser Informationen können die Bildmerkmale als dreidimensionale Punkte in der Umgebung rekonstruiert und in der Karte als so genannte Landmarken gespeichert werden. Weitere Bilder können anschließend über diese Landmarken mit der Umgebung 74 registriert und neue Landmarken hinzugefügt werden. Bei den hier dargestellten Verfahren können auch Maßnahmen wie "Structure from Motion" oder "visual Simultaneous Localization and Mapping" verwendet werden. Mit Hilfe bereitgestellter Informationen können über weitere aktuelle Bildverarbeitungsalgorithmen (Stereo-Matching, Multi-View-Stereo-Matching) hoch aufgelöste dreidimensionale Punktewolken der Umgebung 74 generiert und, falls keine zusätzliche Information, wie z. B. von einem Laser des optischen Sensors 86, vorhanden ist, als Grundlage für die Berechnung des dreidimensionalen Modells der Umgebung 74 verwendet werden.

Zur Umsetzung der Erfindung können Bildverarbeitungsverfahren, die in der Lage sind, durch Analyse von Grauwertverteilungen Bildmerkmale aus Sensor- und/oder Kamerabildern zu bestimmen, die invariant gegenüber geometrischen Transformationen sind, wie z. B. Skalenänderungen, und radiometrischen Transformationen, wie z. B. Helligkeitsänderungen, verwendet werden. Diese Transformationen werden aus Pixeln eines Kamerabilds, die innerhalb einer definierten Nachbarschaft angeordnet sind, berechnet und dazu verwendet, Merkmale, die gleiche markante Punkte in der realen Umgebung 74 abbilden, unterschiedlichen Kamerabildern zuzuordnen.

Mit den verwendeten Maßnahmen, wie "Structure from Motion" oder "Visual Localization and Mapping" kann eine visuelle Karte, die Landmarken und Keyframes umfasst, aus einer Videosequenz oder Einzelbildaufnahmen erstellt werden. Als "Multi-View Stereo-Matching" kann eine Verdichtung der in der Karte befindlichen Landmarken zu einer hochauflösenden räumlichen Punktewolke erreicht werden. Diese hochauflösende Punktewolke kann dazu dienen, das dreidimensionale Modell robuster zu berechnen. Die voranstehend genannten Maßnahmen können zur Realisierung des erfindungsgemäßen Verfahrens für Kameranetzwerke aus dem Sicherheitstechnikbereich kombiniert werden.

Bei einem Verfahren zum automatischen Betreiben einer Überwachungsanlage 60 für die Umgebung 74 kann die Überwachungsanlage 70 durch Hinzufügen mindestens einer Kamera 62, 64, 72, 86 konfiguriert werden. Hierzu werden von wenigstens einem optischen Sensor 66 Sensorbilder der Umgebung 74 aufgenommen, wobei jedem aufgenommenen Sensorbild eine Aufnahmestellung zugeordnet wird. Aus den Sensorbildern mit den zugeordneten Aufnahmestellungen wird eine visuelle Karte der Umgebung erstellt. Außerdem wird von mindestens einer in der Umgebung 74 angeordneten Kamera 62, 64, 72, 86 mindestens ein Kamerabild aufgenommen und mit Sensorbildern der visuellen Karte verglichen. Auf Grundlage eines derartigen Vergleichs kann das mindestens eine Kamerabild in das dreidimensionale Modell projiziert werden. Dabei ist es möglich, das mindestens eine Kamerabild dem wenigstens einem Sensorbild zuzuordnen. Der mindestens einen Kamera 62, 64, 72, 86 kann auch eine Aufnahmestellung des wenigstens einen durch Vergleich ermittelten Sensorbilds zugeordnet werden, wobei die mindestens eine Kamera 62, 64, 72, 86 der Überwachungsanlage hinzugefügt wird.

Mit der Aufnahmestellung eines Sensorbilds kann u. a. die Position, die Ausrichtung, eine Trajektorie, eine Bewegung und/oder ein Sichtfeld als zumindest ein mögliches Aufnahmemerkmal des optischen Sensors 66 in der Umgebung 72 beim Aufnehmen des Sensorbilds berücksichtigt werden. Außerdem werden mit dem optischen Sensor 66 in einem Sensorbild markante Punkte der Umgebung aufgenommen.

Durch den Vergleich des mindestens einen Kamerabilds mit Sensorbildern kann eine Aufnahmestellung der mindestens einen Kamera 62, 64, 72, 86 beim Aufnehmen des mindestens einen Kamerabilds bestimmt werden. Mit dem Kamerabild wird die Umgebung aus einer Sicht der Kamera 62, 64, 72, 86 aufgenommen und abgebildet. Somit ist es möglich, auf Grundlage einer Analyse des Kamerabilds durch Vergleich mit den Sensorbildern der visuellen Karte u. a. eine Position und/oder Ausrichtung der Kamera 62, 64, 72, 86 in der Umgebung beim Aufnehmen des Kamerabilds zu bestimmen. Falls die Kamera 62, 64, 72, 86 beweglich ist, kann aufgrund einer Abfolge sich verändernder Kamerabilder, wobei eine derartige Veränderung durch eine Bewegung der Kamera 62, 64, 72, 86 hervorgerufen wird, die Bewegung und somit eine Trajektorie der Kamera 62, 64, 72, 86 in der Umgebung bestimmt werden. Einer beweglichen und/oder tragbaren Kamera 62, 64, 72, 86 können bspw. von der Recheneinheit 68 der Überwachungsanlage Navigationsbefehle übermittelt werden, die einem Nutzer der beweglichen und/oder tragbaren Kamera 62, 64, 72, 86 auf einem Bildschirm der Kamera 62, 64, 72, 86 dargestellt werden und dem Nutzer Anweisungen zur Bewegung in der Umgebung bereitstellen, so dass die Kamera 62, 64, 72, 86 beim Aufnehmen eines Kamerabilds durch die und/oder in der Umgebung 74 navigiert werden kann.

Die Sensorbilder mit den zugeordneten Aufnahmestellungen können zum Generieren der visuellen Karte miteinander verknüpft werden. Zum Darstellen der Umgebung 74 mit der Übenivachungsanlage 60 wird aus der visuellen Karte das dreidimensionale Modell der Umgebung erstellt.

## Patentansprüche

1. Verfahren zum automatischen Betreiben einer Überwachungsanlage (60) für eine Umgebung (74),
- bei dem von wenigstens einem optischen Sensor (36, 66) Sensorbilder der Umgebung aufgenommen werden, wobei jedem aufgenommenen Sensorbild eine Aufnahmestellung zugeordnet wird,
- bei dem eine visuelle Karte (16) der Umgebung (74) bereitgestellt wird, die die aufgenommenen Sensorbilder mit zugeordneten Aufnahmestellungen umfasst,
- bei dem mit der Aufnahmestellung eines Sensorbilds eine Position und/oder Ausrichtung des optischen Sensors (36, 66) in der Umgebung (74) beim Aufnehmen des Sensorbilds berücksichtigt wird,
- bei dem auf Grundlage der visuellen Karte (16) ein dreidimensionales Modell (2, 26, 42, 44) der Umgebung (74) erstellt wird,
- bei dem von mindestens einer in der Umgebung (74) angeordneten Kamera (48, 62, 64, 72, 86) mindestens ein Kamerabild (18, 20, 22, 24, 28, 30, 32, 34) aufgenommen wird,
- bei dem das mindestens eine Kamerabild (18, 20, 22, 24, 28, 30, 32, 34) mit Sensorbildern der visuellen Karte (16) verglichen wird,
- bei dem das Kamerabild (18, 20, 22, 24, 28, 30, 32, 34) unter Berücksichtigung dieses Vergleichs dem dreidimensionalen Modell (2, 26, 42, 44) überlagert wird,
- bei dem durch den Vergleich des mindestens einen Kamerabilds (18, 20, 22, 24, 28, 30, 32, 34) mit Sensorbildern eine Aufnahmestellung der mindestens einen Kamera (48, 62, 64, 72, 86) beim Aufnehmen des mindestens einen Kamerabilds (18, 20, 22, 24, 28, 30, 32, 34) bestimmt wird,
- bei dem der wenigstens eine optische Sensor (36, 66) videobasiert ist, wobei mit dem wenigstens einen videobasierten, optischen Sensor (36, 66) auf Basis von Videoaufnahmen Sensorbilder der Umgebung aufgenommen werden, wobei für den Fall, dass sich die zu beobachtende Umgebung ändert, das dreidimensionale Modell (2, 26, 42, 44) angepasst wird, wobei der von der Änderung betroffene Bereich der Umgebung von dem wenigstens einen optischen Sensor erneut erfasst wird, und aktualisierte Sensorbilder mit zugeordneten Aufnahmestellungen der visuellen Karte hinzugefügt werden.

2. Verfahren nach Anspruch 1, bei dem mindestens eine bewegliche Kamera (48, 62, 64, 72, 86) auf Grundlage der Aufnahmestellung beim Aufnehmen des mindestens einen Kamerabilds (18, 20, 22, 24, 28, 30, 32, 34) durch die Umgebung (74) navigiert wird.

3. Verfahren nach Anspruch 1 oder 2, bei dem das mindestens eine Kamerabild (18, 20, 22, 24, 28, 30, 32, 34) wenigstens einem Sensorbild zugeordnet wird.

4. Verfahren nach einem der voranstehenden Ansprüche, bei dem mit dem optischen Sensor (36, 66) in einem Sensorbild markante Punkte der Umgebung (74) aufgenommen werden.

5. Verfahren nach einem der voranstehenden Ansprüche, bei dem die Sensorbilder mit den zugeordneten Aufnahmestellungen zum Generieren der visuellen Karte (16) miteinander verknüpft werden.

6. Überwachungsanlage (60) für eine Umgebung (74), die wenigstens einen optischen Sensor (36, 66), mindestens eine Kamera (48, 62, 64, 72, 86) und ein Video Management System (70) umfasst, wobei der wenigstens eine optische Sensor (36, 66) dazu ausgebildet ist, Sensorbilder der Umgebung (74) aufzunehmen und jedem aufgenommenen Sensorbild eine Aufnahmestellung zuzuordnen, wobei mit der Aufnahmestellung eines Sensorbilds eine Position und/oder Ausrichtung des optischen Sensors (36, 66) in der Umgebung (74) beim Aufnehmen des Sensorbilds berücksichtigt wird, wobei das Video Management System (70) dazu ausgebildet ist, eine visuelle Karte (16) der Umgebung (74) bereitzustellen, die die aufgenommenen Sensorbilder mit zugeordneten Aufnahmestellungen umfasst, und auf Grundlage der visuellen Karte (16) ein dreidimensionales Modell (2, 26, 42, 44) der Umgebung (74) zu erstellen, wobei die mindestens eine Kamera (48, 62, 64, 72, 86) in der Umgebung (74) angeordnet ist, und wobei die mindestens eine Kamera (48, 62, 64, 72, 86) dazu ausgebildet ist, mindestens ein Kamerabild (18, 20, 22, 24, 28, 30, 32, 34) aufzunehmen, wobei das Video Management System (70) dazu ausgebildet ist, das mindestens eine Kamerabild (18, 20, 22, 24, 28, 30, 32, 34) mit Sensorbildern der visuellen Karte (16) zu vergleichen und dem dreidimensionalen Modell (2, 26, 42, 44) zu überlagern, wobei durch den Vergleich des mindestens einen Kamerabilds (18, 20, 22, 24, 28, 30, 32, 34) mit Sensorbildern eine Aufnahmestellung der mindestens einen Kamera (48, 62, 64, 72, 86) beim Aufnehmen des mindestens einen Kamerabilds (18, 20, 22, 24, 28, 30, 32, 34) bestimmt wird, der wenigstens eine optische Sensor (36, 66) videobasiert ist, wobei mit dem wenigstens einen videobasierten, optischen Sensor (36, 66) auf Basis von Videoaufnahmen Sensorbilder der Umgebung aufgenommen werden, wobei für den Fall, dass sich die zu beobachtende Umgebung ändert, das dreidimensionale Modell (2, 26, 42, 44) angepasst wird, der von der Änderung betroffene Bereich der Umgebung von dem wenigstens einen optischen Sensor erneut erfasst wird, und aktualisierte Sensorbilder mit zugeordneten Aufnahmestellungen der visuellen Karte hinzugefügt werden.

7. Überwachungsanlage nach Anspruch 6, bei der die mindestens eine Kamera (48, 62, 64, 72, 86) fest installiert ausgebildet ist.

8. Überwachungsanlage nach Anspruch 6 oder 7, bei der die mindestens eine Kamera (48, 62, 64, 72, 86) mobil ausgebildet ist.

## Claims

1. Method for automatically operating a monitoring installation (60) for an environment (74),
- wherein sensor images of the environment are recorded by at least one optical sensor (36, 66), wherein a recording position is assigned to each recorded sensor image,
- wherein a visual map (16) of the environment (74) is provided, said map comprising the recorded sensor images with assigned recording positions,
- wherein, with the recording position of a sensor image, a position and/or alignment of the optical sensor (36, 66) in the environment (74) is taken into account when recording the sensor image,
- wherein a three-dimensional model (2, 26, 42, 44) of the environment (74) is created on the basis of the visual map (16),
- wherein at least one camera image (18, 20, 22, 24, 28, 30, 32, 34) is recorded by at least one camera (48, 62, 64, 72, 86) arranged in the environment (74),
- wherein the at least one camera image (18, 20, 22, 24, 28, 30, 32, 34) is compared to sensor images of the visual map (16),
- wherein the camera image (18, 20, 22, 24, 28, 30, 32, 34) is superposed onto the three-dimensional model (2, 26, 42, 44) taking into account this comparison,
- wherein a recording position of the at least one camera (48, 62, 64, 72, 86) when recording the at least one camera image (18, 20, 22, 24, 28, 30, 32, 34) is determined by the comparison of the at least one camera image (18, 20, 22, 24, 28, 30, 32, 34) with the sensor images,
- wherein the at least one optical sensor (36, 66) is video-based, wherein sensor images of the environment are recorded with the at least one video-based, optical sensor (36, 66) on the basis of video recordings, wherein, in the case that there is a change in the environment to be observed, the three-dimensional model (2, 26, 42, 44) is adapted, wherein the region of the environment that is affected by the change is captured again by the at least one optical sensor and updated sensor images with assigned recording positions are added to the visual map.

2. Method according to Claim 1, wherein at least one movable camera (48, 62, 64, 72, 86) is navigated through the environment (74) on the basis of the recording position when recording the at least one camera image (18, 20, 22, 24, 28, 30, 32, 34).

3. Method according to Claim 1 or 2, wherein the at least one camera image (18, 20, 22, 24, 28, 30, 32, 34) is assigned to at least one sensor image.

4. Method according to any one of the preceding claims, wherein prominent points of the environment (74) are recorded in a sensor image using the optical sensor (36, 66).

5. Method according to any one of the preceding claims, wherein the sensor images with the associated recording positions are linked to one another for generating the visual map (16).

6. Monitoring installation (60) for an environment (74), comprising at least one optical sensor (36, 66), at least one camera (48, 62, 64, 72, 86) and a video management system (70), wherein the at least one optical sensor (36, 66) is embodied to record sensor images of the environment (74) and assign a recording position to each recorded sensor image, wherein, with the recording position of a sensor image, a position and/or alignment of the optical sensor (36, 66) in the environment (74) when recording the sensor image is taken into consideration, wherein the video management system (70) is embodied to provide a visual map (16) of the environment (74), said visual map comprising the recorded sensor images with assigned recording positions, and create a three-dimensional model (2, 26, 42, 44) of the environment (74) on the basis of the visual map (16), wherein the at least one camera (48, 62, 64, 72, 86) is arranged in the environment (74), and wherein the at least one camera (48, 62, 64, 72, 86) is embodied to record at least one camera image (18, 20, 22, 24, 28, 30, 32, 34), wherein the video management system (70) is embodied to compare the at least one camera image (18, 20, 22, 24, 28, 30, 32, 34) with the sensor images of the visual map (16) and superpose said at least one camera image onto the three-dimensional model (2, 26, 42, 44), wherein a recording position of the at least one camera (48, 62, 64, 72, 86) when recording the at least one camera image (18, 20, 22, 24, 28, 30, 32, 34) is determined by the comparison of the at least one camera image (18, 20, 22, 24, 28, 30, 32, 34) with sensor images, the at least one optical sensor (36, 66) is video-based, wherein sensor images of the environment are recorded with the at least one video-based, optical sensor (36, 66) on the basis of video recordings, wherein, in the case that there is a change in the environment to be observed, the three-dimensional model (2, 26, 42, 44) is adapted, wherein the region of the environment that is affected by the change is captured again by the at least one optical sensor and updated sensor images with assigned recording positions are added to the visual map.

7. Monitoring installation according to Claim 6, in which the at least one camera (48, 62, 64, 72, 86) has a fixedly installed embodiment.

8. Monitoring installation according to Claim 6 or 7, wherein the at least one camera (48, 62, 64, 72, 86) has a mobile embodiment.

## Revendications

1. Procédé pour faire fonctionner automatiquement une installation de surveillance (60) pour un environnement (74),
- selon lequel des images de capteur de l'environnement sont enregistrées par au moins un capteur optique (36, 66), une posture d'enregistrement étant associée à chaque image de capteur enregistrée,
- selon lequel une carte (16) visuelle de l'environnement (74) est mise à disposition, laquelle comprend les images de capteur enregistrées avec des postures d'enregistrement associées,
- selon lequel une position et/ou une orientation du capteur optique (36, 66) dans l'environnement (74) lors de l'enregistrement de l'image de capteur est prise en compte avec la posture d'enregistrement d'une image de capteur,
- selon lequel un modèle tridimensionnel (2, 26, 42, 44) de l'environnement (74) est créé sur la base de la carte (16) visuelle,
- selon lequel au moins une image de caméra (18, 20, 22, 24, 28, 30, 32, 34) est enregistrée par au moins une caméra (48, 62, 64, 72, 86) disposée dans l'environnement (74),
- selon lequel l'au moins une image de caméra (18, 20, 22, 24, 28, 30, 32, 34) est comparée avec des images de capteur de la carte (16) visuelle,
- selon lequel l'image de caméra (18, 20, 22, 24, 28, 30, 32, 34) est superposée au modèle tridimensionnel (2, 26, 42, 44) en tenant compte de cette comparaison,
- selon lequel une posture d'enregistrement de l'au moins une caméra (48, 62, 64, 72, 86) lors de l'enregistrement de l'au moins une image de caméra (18, 20, 22, 24, 28, 30, 32, 34) est déterminée par la comparaison de l'au moins une image de caméra (18, 20, 22, 24, 28, 30, 32, 34) avec des images de capteur,
- selon lequel l'au moins un capteur optique (36, 66) est basé sur la vidéo, des images de capteur de l'environnement étant enregistrées avec l'au moins un capteur optique (36, 66) basé sur la vidéo sur la base d'enregistrements vidéo,
le modèle tridimensionnel (2, 26, 42, 44) étant adapté dans le cas où l'environnement à surveiller change, la zone de l'environnement qui est concernée par le changement étant de nouveau acquise par l'au moins un capteur optique et des images de capteur actualisées avec les postures d'enregistrement associées étant ajoutées à la carte visuelle.

2. Procédé selon la revendication 1, selon lequel au moins une caméra mobile (48, 62, 64, 72, 86) navigue à travers l'environnement (74) en se basant sur la posture d'enregistrement lors de l'enregistrement de l'au moins une image de caméra (18, 20, 22, 24, 28, 30, 32, 34).

3. Procédé selon la revendication 1 ou 2, selon lequel l'au moins une image de caméra (18, 20, 22, 24, 28, 30, 32, 34) est associée à au moins une image de capteur.

4. Procédé selon l'une des revendications précédentes, selon lequel les points marquants de l'environnement (74) sont enregistrés avec le capteur optique (36, 66) dans une image de capteur.

5. Procédé selon l'une des revendications précédentes, selon lequel les images de capteur avec les postures d'enregistrement associées sont combinées entre elles en vue de générer la carte (16) visuelle.

6. Installation de surveillance (60) pour un environnement (74), laquelle comprend au moins un capteur optique (36, 66), au moins une caméra (48, 62, 64, 72, 86) et un système de gestion vidéo (70), l'au moins un capteur optique (36, 66) étant configuré pour enregistrer des images de capteur de l'environnement (74) et pour associer une posture d'enregistrement à chaque image de capteur enregistrée, une position et/ou une orientation du capteur optique (36, 66) dans l'environnement (74) lors de l'enregistrement de l'image de capteur étant prise en compte avec la posture d'enregistrement d'une image de capteur, le système de gestion vidéo (70) étant configuré pour mettre à disposition une carte (16) visuelle de l'environnement (74), laquelle comprend les images de capteur enregistrées avec les postures d'enregistrement associées et, en se basant sur la carte (16) visuelle, créer un modèle tridimensionnel (2, 26, 42, 44) de l'environnement (74), l'au moins une caméra (48, 62, 64, 72, 86) étant disposée dans l'environnement (74) et l'au moins une caméra (48, 62, 64, 72, 86) étant configurée pour enregistrer au moins une image de caméra (18, 20, 22, 24, 28, 30, 32, 34), le système de gestion vidéo (70) étant configuré pour comparer l'au moins une image de caméra (18, 20, 22, 24, 28, 30, 32, 34) avec des images de capteur de la carte (16) visuelle et la superposer au modèle tridimensionnel (2, 26, 42, 44), une posture d'enregistrement de l'au moins une caméra (48, 62, 64, 72, 86) lors de l'enregistrement de l'au moins une image de caméra (18, 20, 22, 24, 28, 30, 32, 34) étant déterminée par la comparaison de l'au moins une image de caméra (18, 20, 22, 24, 28, 30, 32, 34) avec des images de capteur, l'au moins un capteur optique (36, 66) étant basé sur la vidéo, des images de capteur de l'environnement étant enregistrées avec l'au moins un capteur optique (36, 66) basé sur la vidéo sur la base d'enregistrements vidéo, le modèle tridimensionnel (2, 26, 42, 44) étant adapté dans le cas où l'environnement à surveiller change, la zone de l'environnement qui est concernée par le changement étant de nouveau acquise par l'au moins un capteur optique et des images de capteur actualisées avec des postures d'enregistrement associées étant ajoutées à la carte visuelle.

7. Installation de surveillance selon la revendication 6, l'au moins une caméra (48, 62, 64, 72, 86) étant réalisée installée en position fixe.

8. Installation de surveillance selon la revendication 6 ou 7, dans laquelle l'au moins une caméra (48, 62, 64, 72, 86) est réalisée mobile.
